# EUROPÄISCHE PATENTSCHRIFT

(11) **EP 3 482 076 B1**
(45) Veröffentlichungstag und Bekanntmachung des Hinweises auf die Patenterteilung: **30.08.2023**
(21) Anmeldenummer: 17734734.1
(22) Anmeldetag: 03.07.2017
(51) Int. Cl.: F04B 39/14, F04B 39/12, F04B 53/10, G01H 3/04, F04B 39/10

(54) **ZYLINDERKOPFDECKEL FÜR EINEN KÄLTEMITTELKOMPRESSOR**
CYLINDER HEAD COVER FOR A REFRIGERANT COMPRESSOR
COUVERCLE DE TÊTE DE CYLINDRE POUR UN COMPRESSEUR DE RÉFRIGÉRANT

(30) Priorität: 06.07.2016 AT 5012216 U
(43) Veröffentlichungstag der Anmeldung: 15.05.2019
(73) Patentinhaber: Secop GmbH, 24941 Flensburg (DE)
(72) Erfinder: STEINBRUNN, Rolf, 24969 Großenwiehe (DE)
(74) Vertreter: KLIMENT & HENHAPEL
(86) Internationale Anmeldenummer: PCT/EP2017/066494
(87) Internationale Veröffentlichungsnummer: WO 2018/007313

(56) Entgegenhaltungen:
- US-A- 4 978 285
- US-A- 5 249 939
- US-A1- 2002 157 717
- US-A1- 2004 202 563

## Beschreibung

### GEBIET DER ERFINDUNG

Die Erfindung betrifft einen Zylinderkopfdeckel für einen eine elektrische Antriebseinheit, ein Zylindergehäuse mit einer Zylinderkopfanordnung, eine von der elektrischen Antriebseinheit antreibbare Kurbelwelle sowie einen von der Kurbelwelle angetriebenen, im Zylindergehäuse geführten, das Kältemittel verdichtenden, Kolben umfassenden Kältemittelkompressor, wobei der Zylinderkopfdeckel an der Zylinderkopfanordnung befestigbar ist, um einen Hohlraum zur Aufnahme von durch den Kolben verdichtetem Kältemittel auszubilden, wobei die Zylinderkopfanordnung eine am Zylindergehäuse befestigte Ventilplatte mit einer Auslassöffnung und einem die Auslassöffnung taktweise verschließenden Auslassventil bestehend aus einer Ventilfeder und einer Anschlagplatte zur Begrenzung einer Öffnungsbewegung der Ventilfeder umfasst, sowie einen Kältemittelkompressor und eine Kompressorfamilie mit Kältemittelkompressoren unterschiedlicher Kälteleistung.

### STAND DER TECHNIK

Kältemittelkompressoren, insbesondere hermetisch gekapselte Kältemittelkompressoren, sind seit langem bekannt und kommen vorwiegend in Kühlschränken oder -regalen zum Einsatz. Der Kältemittelprozess als solches ist ebenfalls seit langem bekannt. Kältemittel wird dabei durch Energieaufnahme aus dem zu kühlenden Raum in einem Verdampfer erhitzt und schließlich überhitzt und mittels des Kältemittelkompressors, auch Kältemittelverdichter genannt, durch einen sich in einem Zylindergehäuse translatorisch bewegenden Kolben auf ein höheres Druckniveau gepumpt, wo das Kältemittel Wärme über einen Kondensator abgibt und über eine Drossel, in der eine Druckreduzierung und die Abkühlung des Kältemittels erfolgt, wieder zurück in den Verdampfer befördert wird. Die Bewegung des Kolbens wird über eine von einer elektrischen Antriebseinheit angetriebene Kurbelwelle realisiert.

Je nach Anforderungen werden solche Kältemittelkompressoren mit unterschiedlichen Kälteleistungen angeboten. Die Kälteleistung eines Kältemittelkompressors ist dabei einerseits durch die zum Einsatz kommende elektrische Antriebseinheit, beispielsweise die Leistung eines Elektromotors, festgelegt. Andererseits sind für die Bestimmung der Kälteleistung auch der Hubraum des Zylindergehäuses, die Größe des Kolbens und der Hub selbst maßgeblich, da über die geometrischen Verhältnisse die Menge des in einem Verdichtungstakt verdichtbaren Kältemittels festgelegt ist.

Um den Verdichtungsraum des Zylindergehäuses, in anderen Worten den Zylinder selbst, zu verschließen ist eine Zylinderkopfanordnung am Zylindergehäuse befestigt, wobei die Zylinderkopfanordnung eine eine Auslassöffnung und eine Saugöffnung aufweisende Ventilplatte, sowie einen mit der Ventilplatte einen Hohlraum zur Aufnahme von verdichtetem Kältemittel ausbildenden Zylinderkopfdeckel umfasst. Die Auslassöffnung in der Ventilplatte ist im Saugtakt durch eine auf der dem Zylinderkopfdeckel zugewandten Seite der Ventilplatte angeordnete Ventilfeder verschlossen. Während des Verdichtungstakts erhöht sich der Staudruck auf die Ventilfeder, bis sie sich in einem definierten Kurbelwinkelbereich öffnet, um den Übertritt von verdichtetem Kältemittel in den Hohlraum im Zylinderkopfdeckel bzw. in die Druckstrecke zu ermöglichen.

Die auf die Ventilfeder wirkenden Staudrücke, die je nach Bauform des Kältemittelkompressors variieren, beschleunigen die Ventilfeder während des Öffnungsvorgangs. Um die Öffnungsbewegung der Ventilfeder zu begrenzen und damit eine Überbelastung der Ventilfeder zu verhindern, umfasst die Zylinderkopfanordnung eine Anschlagplatte, welche durch ihre Form und Positionierung die Position der Ventilfeder in einer offenen Position vorgibt. Mit anderen Worten legt sich die Ventilfeder in der Öffnungsposition an die Anschlagplatte an, sodass eine weitere Öffnungsbewegung der Ventilfeder durch die Anschlagplatte unterbunden ist. Durch die Festlegung der offenen Position der Ventilfeder mittels der Anschlagplatte kann weiters verhindert werden, dass sich die Ventilfeder zu weit öffnet und es während der Schließbewegung der Ventilfeder zu einem Rückströmen von Kältemittel aus dem Hohlraum in das Zylindergehäuse, dem sogenannten Backflow, kommt. Üblicher Weise stützt sich die Anschlagplatte an der Innenseite des Zylinderkopfdeckels ab, um die von der Ventilfeder ausgeübte Kraft aufzunehmen. Die Anschlagplatte und die Ventilfeder bilden dabei ein Auslassventil aus, wobei die Dimensionierung des Auslassventils vom Hubraum des Kältemittelkompressors und vom während des Ausstoßtakts in den Hohlraum übertretenden Massestrom abhängig ist.

Beispielsweise offenbart die EP 0 437 314 A1 einen Zylinderkopf für einen Kältemittelkompressor, wobei das Auslassventil ein Membranventil und ein Hilfsmembranventil umfasst. Membranventil und Hilfsmembranventil haben unterschiedliche Elastizitätsmodule. Der Zylinderkopfdeckel weist ein Stoppelement mit einer Anschlagsfläche für die Membranventile auf, welches Stoppelement sich in Richtung der Membranventile erstreckt, sodass die Membranventile in einer geöffneten Stellung an der Anschlagsfläche anschlagen.

Die WO 2007/037239 A1 zeigt einen Zylinderkopf mit einer Ventilplatte und einer Ventilfeder, wobei ein Absätze aufweisendes Anschlagelement durch den Zylinderkopfdeckel ausgebildet ist, sodass die Ventilfeder unterschiedliche Federsteifigkeiten aufweist, je nachdem an welchem Absatz des Anschlagselements die Ventilfeder anliegt.

Die US 2004/0202563 A1 offenbart eine Ventilanordnung in welcher ein als Teil einer Anschlagplatte ausgebildetes Anschlagelement durch eine drei Flächen eines Zylinderkopfdeckels umfassende Spanneinheit bogenförmig über einer Auslassöffnung verspannt wird, sodass das Anschlagelement eine bogenförmige Anschlagfläche für eine Ventilfeder bildet.

Ein Nachteil des Stands der Technik äußert sich jedoch darin, dass für verschiedene Kältemittelkompressoren einer Kompressorfamilie, die im Wesentlichen den selben Aufbau aufweisen, sich aber in der Kälteleistung und/oder dem Hubraum voneinander unterscheiden, die Zylinderkopfanordnung jeweils ein eigens auf die Kälteleistung, den Hubraum und den Massestrom des Kältemittelkompressors angepasstes Auslassventil aufweist. Die verschiedenen Auslassventile umfassen dabei jeweils unterschiedlich ausgelegte Anschlagplatten, die die Öffnungsbewegung der Ventilfeder in unterschiedlichen Positionen begrenzen. Somit muss ein auf die jeweilige Anschlagplatte abgestimmter Zylinderkopfdeckel an der Zylinderkopfanordnung montiert werden, um die Öffnungsposition der Ventilfeder für den Betrieb richtig einstellen zu können bzw. um die Öffnungsbewegung der Ventilfeder an die Erfordernisse des Kältemittelkompressors anzupassen und die Position der Anschlagplatte des Auslassventils festzulegen. In einer Montagelinie muss demnach für jeden Kompressor-Typ sowohl ein eigens ausgelegtes Auslassventil mit entsprechender Anschlagplatte als auch ein eigens ausgelegter Zylinderkopfdeckel bereit gestellt werden, was einerseits hohe Fertigungskosten für die Herstellung der unterschiedlichen Komponenten notwendig macht und andererseits die Montagekosten erhöht, da unterschiedliche Handgriffe notwendig sind.

US 2004/202563 A1 betrifft eine Ventilanordnung für einen Hubkolben-Kältemittelkompressor. Die Ventilanordnung besteht aus einer Ventilplatte, in der die Auslassöffnung angeordnet ist, einer Ventilplatte, welche die Ventilfeder ausbildet, einer Anschlagplatte, welche eine Anschlagelement aufweist, und einem Zylinderkopfdeckel mit drei Flächen, die gemeinsam als Spanneinheit bezeichnet werden und zur Formgebung des Anschlagelements dienen.

### AUFGABE DER ERFINDUNG

Es ist daher eine Aufgabe der Erfindung die Nachteile des Stands der Technik zu überwinden und einen Zylinderkopfdeckel für eine Zylinderkopfanordnung eines Kältemittelkompressors vorzuschlagen, der kostengünstiger herstellbar und montierbar ist, jedoch eine sichere Abstützung der Anschlagplatte gewährleistet.

### DARSTELLUNG DER ERFINDUNG

Diese Aufgabe wird in einem erfindungsgemäßen Zylinderkopfdeckel für einen eine elektrische Antriebseinheit, ein Zylindergehäuse mit einer Zylinderkopfanordnung, eine von der elektrischen Antriebseinheit antreibbare Kurbelwelle sowie einen von der Kurbelwelle angetriebenen, im Zylindergehäuse geführten, das Kältemittel verdichtenden, Kolben umfassenden Kältemittelkompressor, wobei der Zylinderkopfdeckel an der Zylinderkopfanordnung befestigbar ist, um einen Hohlraum zur Aufnahme von durch den Kolben verdichtetem Kältemittel auszubilden, wobei die Zylinderkopfanordnung eine am Zylindergehäuse befestigte Ventilplatte mit einer Auslassöffnung und einem die Auslassöffnung taktweise verschließenden Auslassventil bestehend aus einer Ventilfeder und einer Anschlagplatte zur Begrenzung einer Öffnungsbewegung der Ventilfeder umfasst, dadurch erreicht, dass der Zylinderkopfdeckel zumindest zwei Anlageflächen für die Abstützung von Anschlagplatten unterschiedlicher Auslassventile aufweist, um unterschiedliche Öffnungspositionen der Ventilfedern der unterschiedlichen Auslassventile zu ermöglichen, und dass der Zylinderkopfdeckel ein die Anlageflächen ausbildendes Stützelement aufweist und jeweils zwei benachbarte Anlageflächen von jeweils einem, vorzugsweise stufenförmigen, Absatz des Stützelements ausgebildet sind.

Die erfindungsgemäße Gestaltung des Zylinderkopfdeckels ermöglicht es einen einzigen Zylinderkopfdeckel für eine Mehrzahl an unterschiedlichen Kältemittelkompressoren verwenden zu können, da jeweils eine der verschiedenen Anlageflächen des Zylinderkopfdeckels für jeweils eine bestimmte Anschlagplatte vorgesehen ist. Somit lässt sich mittels einer an einer der Anlageflächen anliegenden Anschlagplatte eines Auslassventils die Öffnungsbewegung der Ventilfeder in einer definierten Position begrenzen. Dadurch, dass zumindest zwei Anlageflächen vorgesehen sind, lässt sich die Öffnungsbewegung von Ventilfedern unterschiedlicher Auslassventile unterschiedlich begrenzen und somit auf unterschiedliche Kälteleistungen des Kältemittelkompressors einstellen. Jede der Anlageflächen ist für eine Anschlagplatte vorgesehen, sodass durch die Anlage der Anschlagplatte an der jeweiligen dafür vorgesehenen Anlagefläche verschiedene Öffnungspositionen für die Ventilfedern der unterschiedlichen Auslassventile einstellbar ist.

Sind beispielsweise vier Anlageflächen vorgesehen, so kann der Zylinderkopfdeckel für zumindest vier unterschiedlichen Kältemittelkompressoren bzw. Kältemittelkompressor-Typen verwendet werden, wobei jeder der Kältemittelkompressoren ein unterschiedliches Auslassventil aufweist. Die Anlageflächen sind auf die jeweiligen Abmessungen der Anschlagplatten der unterschiedlichen Auslassventile angepasst, sodass vier unterschiedliche Öffnungspositionen der Ventilfedern der verschiedenen Auslassventile mit nur einem Zylinderkopfdeckel einstellbar sind. Es sind jedoch zumindest zwei Anlageflächen notwendig, um den Zylinderkopfdeckel für mehr als eine Kälteleistung bzw. für mehr als einen Kältemittelkompressor-Typ einsetzen zu können.

Durch die Anlageflächen, die die Position der jeweils zugeordneten Anschlagplatten vorgeben, kann somit die Öffnungsbewegung der Ventilfeder auf das Hubvolumen des Kolbens bzw. den dadurch bewirkten Massestrom eingestellt werden. Es versteht sich dabei von selbst, dass jede Zylinderkopfanordnung nur ein Auslassventil aufweist und demnach in einem Kältemittelkompressor immer nur eine an einer Anlagefläche anliegende Anschlagplatte angeordnet ist.

Erfindungsgemäß ist weiter vorgesehen, dass der Zylinderkopfdeckel ein die Anlageflächen ausbildendes Stützelement aufweist und jeweils zwei benachbarte Anlageflächen von jeweils einem, vorzugsweise stufenförmigen, Absatz des Stützelements ausgebildet sind. Bei dem Stützelement kann es sich dabei beispielsweise in einer einteiligen Bauweise um eine Auswölbung des Zylinderkopfdeckels handeln oder in einer mehrteiligen Bauweise um ein im Zylinderkopfdeckel form- und/oder kraftschlüssig fixiertes Element, wie einen Bolzen, handeln. Durch das Stützelement kann der Abstand zwischen einer Dichtfläche des Zylinderkopfdeckels und den Anlageflächen reduziert werden, bzw. kann die Anschlagplatte näher an der Dichtfläche durch die Anlagefläche des Stützelements abgestützt werden. Die Anordnung aller Anlageflächen an einem gemeinsamen Stützelement ermöglicht die einfache Fertigung der Anlageflächen, da diese in einem Vorgang gefertigt werden können, beispielsweise können die Stufen eingefräst werden. Durch die Stufenform lassen sich des Weiteren in einfacher Art und Weise die Anlageflächen an die vorgesehene Öffnungsposition der Anschlagplatte anpassen.

In einer weiteren Ausführungsvariante der Erfindung ist vorgesehen, dass der Zylinderkopfdeckel eine umlaufende Dichtfläche zur Abdichtung des durch die Ventilplatte begrenzten Hohlraums aufweist und dass die Anlageflächen in einem unterschiedlich großen Normalabstand zur Dichtfläche angeordnet sind. Die Dichtfläche des Zylinderkopfdeckels ist in der Regel plan ausgeführt und liegt im Betriebszustand an der Ventilplatte an, wobei üblicher Weise ein Dichtelement, beispielsweise eine Flachdichtung aus Kunststoff oder Papier, zwischen Dichtfläche und Ventilplatte angeordnet ist. In einer bevorzugten Ausführungsvariante kann die Dichtfläche eine, vorzugsweise umlaufende, Wulst aufweisen, um das Dichtelement zu fixieren und ein Herausdrücken des Dichtelements während des Betriebs zu verhindern. Wenn das Dichtelement eine geringe Dicke aufweist, beispielsweise kleiner als 0,25 mm, insbesondere kleiner als 0,10 mm, entspricht der Abstand zwischen der Dichtfläche und den Anlageflächen im Wesentlichen dem Abstand zwischen den Anlageflächen und der Ventilplatte im Betriebszustand. Wenn die Dicke des Dichtmittels jedoch nicht vernachlässigbar ist, beispielsweise größer als 0,25 mm ist, insbesondere zwischen 0,5 mm und 1 mm, beispielsweise bei 0,76 mm, liegt, so muss die Dicke des Dichtmittels bei der Dimensionierung der Anlageflächen berücksichtigt werden. Beispielsweise kann die Öffnungshöhe der Ventilfeder durch die Wahl eines Dichtmittels mit entsprechender Dicke vergrößert oder verkleinert werden. Durch die unterschiedlichen Abstände der Anlageflächen von der Dichtfläche lassen sich in besonders einfacher Art und Weise unterschiedliche Positionen für verschiedene Anschlagplatten festlegen. Auch lässt sich die Geometrie der Anschlagplatte vereinfachen, da durch die exakte Definition der Anlagefläche im Zusammenspiel mit der Geometrie der Anschlagplatte bereits die Öffnungsposition der Ventilfeder weitest gehend vorbestimmt ist. Der Normalabstand wird dabei in der Regel parallel zum Normalvektor der Dichtfläche gemessen. Der Normalabstand beträgt dabei zwischen 1,5 mm und 8 mm, vorzugsweise zwischen 3 mm und 7 mm, besonders bevorzugt zwischen 4 mm und 6 mm, insbesondere 5 mm +/- 0,5 mm. In anderen Worten werden die Normalabstände der Anlageflächen derart gewählt, dass in der durch die jeweilige Anlagefläche definierte Öffnungsposition der Ventilfeder die Öffnungshöhe, gemessen entlang einer Längsachse der Auslassöffnung zwischen der Ventilplatte und der Ventilfeder, zwischen 0,8 mm und 3,0 mm, vorzugsweise zwischen 1,0 mm und 2,8 mm, besonders bevorzugt zwischen 1,2 mm und 2,6 mm, insbesondere zwischen 1,6 mm und 1,8 mm, liegt. Bei zwei Anlageflächen wäre so beispielsweise die Kombination aus 0,8 mm und 2,4 mm oder 0,9 mm und 2,2 mm oder 1,0 mm und 1,8 mm Öffnungshöhe denkbar, um nur einige Möglichkeiten zu nennen.

Gemäß einer weiteren Ausführungsvariante der Erfindung liegt die Höhendifferenz zwischen der der Dichtfläche am nächsten angeordneten Anlagefläche und der von der Dichtfläche am weitesten entfernten Anlagefläche in einem Bereich zwischen 0,2 mm und 2,6 mm, vorzugsweise zwischen 0,4 mm und 2,0 mm, besonders bevorzugt zwischen 0,6 mm und 1,6 mm insbesondere zwischen 0,8 mm und 1,2 mm. Denkbar sind demnach beispielsweise Werte wie 1 mm, 1,4 mm, 1,8 mm, 2,2 mm oder 2,4 mm. Durch die beiden Maximalwerte werden die größte Öffnungsposition der Ventilfeder und die kleinste Öffnungsposition der Ventilfeder bestimmt, welche, unter anderem, mit dem größten und dem kleinsten Hubraum eines Kältemittelkompressors der Kompressorfamilie bzw. mit der Drehzahl des Kältemittelkompressors der Kompressorfamilie korrespondieren. Die Höhendifferenz wird dabei ebenfalls als Normalabstand gemessen. Sofern die Anlageflächen nicht parallel zur Dichtfläche angeordnet sind, beziehen sich die Maße auf die Kante der Stufe. Es hat sich herausgestellt, dass mit einer Höhendifferenz in einem Bereich zwischen 0,2 mm und 2,6 mm verschiedene Auslassventile für Kältemittelkompressoren mit Hubräumen zwischen 15 cm³ und 21 cm³ mit einem baugleichen Zylinderkopfdeckel abstützen lassen.

Um eine besonders feine Abstimmung der Anlageflächen zu ermöglichen, ist in einer weiteren Ausführungsvariante der Erfindung vorgesehen, dass die Höhendifferenz zwischen zwei benachbarten Anlageflächen zwischen 0,2 mm und 2 mm, vorzugsweise zwischen 0,4 mm und 1,6 mm, insbesondere zwischen 0,6 mm und 1 mm, liegt. Denkbar sind dabei demnach beispielsweise Werte von 0,5 mm, 0,8 mm, 1,2 mm, 1,4 mm, 1,5 mm oder 1,8 mm.

In einer bevorzugten Ausführungsvariante der Erfindung ist vorgesehen, dass die Anlageflächen gekrümmt ausgebildet sind und vorzugsweise an die Form der Anschlagplatten unterschiedlicher Auslassventile angepasst sind. Dadurch kann der Stützeffekt der Anlageflächen auf die Anschlagplatten verstärkt werden, da die Anschlagplatten in der Regel im Betriebszustand gewölbt sind. Durch die gekrümmte Ausführung der Anlageflächen wird die Verformung der Anschlagplatte durch die Anlagefläche verringert und gleichzeitig die Fläche, an der die Anschlagplatte an der Anlagefläche anliegt, betragsmäßig vergrößert.

Besonders einfach und wirtschaftlich ist die Herstellung der Anlageflächen jedoch, wenn diese parallel ausgerichtet sind. Weiter vereinfacht kann die Herstellung werden, wenn die Anlageflächen eben ausgebildet sind und zudem parallel zur Dichtfläche ausgerichtet sind. Daher ist gemäß einer weiteren bevorzugten Ausführungsvariante vorgesehen, dass die Anlageflächen parallel zueinander, und vorzugsweise parallel zur Dichtfläche, ausgerichtet sind. Durch die parallele Anordnung der Anlageflächen ist der wirksame Normalabstand unempfindlich gegenüber der Positioniergenauigkeit der Anschlagplatte.

Eine besonders bevorzugte Ausführungsvariante sieht vor, dass das Stützelement eine erste und eine zweite Anlagefläche aufweist, wobei die erste Anlagefläche zur Abstützung der Anschlagplatte eines ersten Auslassventils ausgebildet ist, um eine erste Öffnungsposition der Ventilfeder des ersten Auslassventils einzustellen, und wobei die zweite Anlagefläche zur Abstützung der Anschlagplatte eines alternativen Auslassventils ausgebildet ist, um eine alternative Öffnungsposition der Ventilfeder des alternativen Auslassventils einzustellen. Mit einem derart ausgebildeten Zylinderkopfdeckel lassen sich also in einfacher Art und Weise zwei unterschiedliche Auslassventile für zumindest zwei unterschiedliche Kältemittelkompressoren fixieren.

Die Erfindung betrifft auch einen Kältemittelkompressor mit einer elektrischen Antriebseinheit, einem Zylindergehäuse, einer von der elektrischen Antriebseinheit antreibbaren Kurbelwelle sowie einem von der Kurbelwelle angetriebenen, im Zylindergehäuse geführten, Kältemittel verdichtenden, Kolben, wobei eine Zylinderkopfanordnung mit einer eine Auslassöffnung aufweisenden Ventilplatte und einem Auslassventil am Zylindergehäuse befestigt ist, wobei das Auslassventil eine die Auslassöffnung taktweise verschließende Ventilfeder und eine an der Ventilplatte angeordnete Anschlagplatte zur Begrenzung der Öffnungsbewegung der Ventilfeder umfasst, und ein die Anschlagplatte abstützender Zylinderkopfdeckel an der Zylinderkopfanordnung befestigt ist. Die erfindungsgemäße Ausbildung des Zylinderkopfdeckels ermöglicht dabei einen flexiblen Einsatz von baugleichen Zylinderkopfdeckeln in mehreren unterschiedlichen Kältemittelkompressoren oder Kältemittelkompressor-Typen mit unterschiedlichen Auslassventilen. Da die Anlageflächen auf die unterschiedlichen Auslassventile abgestimmt sind, stützt sich also die Anschlagplatte des im Kältemittelkompressor verbauten Auslassventils an genau einer, nämlich der dafür vorgesehenen, Anlagefläche ab, während die übrigen Anlageflächen nicht belegt sind. Je nachdem an welchem Kältemittelkompressor bzw. Kältemittelkompressor-Typ der Zylinderkopfdeckel angebracht ist, unterscheidet sich die im Eingriff befindliche Anlagefläche. Es besteht bei der Montage keine Notwendigkeit der Kontrolle: Wenn das richtige Auslassventil auf der Ventilplatte vormontiert ist, kommt diese automatisch in Eingriff mit der passenden Anlagefläche.

In einer weiteren Ausführungsvariante des erfindungsgemäßen Kältemittelkompressors ist vorgesehen, dass die Anschlagplatte einen an der Ventilplatte befestigten Befestigungsabschnitt und einen, vorzugsweise gewölbten, freien Abschnitt zur Begrenzung der Öffnungsbewegung der Ventilfeder aufweist, wobei ein Endbereich des freien Abschnitts an einer der Anlageflächen anliegt. Üblicher Weise ist der Befestigungsabschnitt an der Ventilplatte angenietet während der freie Abschnitt gewölbt ausgebildet ist, um die Biegelinie der Ventilfeder abzubilden, sodass sich diese in der Öffnungsposition im Bereich der Projektion der Auslassöffnung auf die Anschlagplatte vollflächig an den freien Abschnitt anlegen kann.

Eine weitere Ausführungsvariante sieht vor, dass die Anschlagplatte zwischen der jeweiligen Anlagefläche und der Ventilplatte vorgespannt ist. Beim befestigen des Zylinderkopfdeckels am Zylindergehäuse wird die Anschlagplatte in Richtung der Ventilplatte gedrückt und ist somit im Betriebszustand vorgespannt. Dadurch werden Fertigungstoleranzen der Anschlagplatte ausgeglichen und die Stabilität der im Zylinderkopf befestigten Anschlagplatte während des Betriebs erhöht.

Gemäß einer weiteren Ausführungsvariante des erfindungsgemäßen Kältemittelkompressors ist vorgesehen, dass diejenige Anlagefläche, deren Abstand von der Längsachse der Auslassöffnung in radialer Richtung am kleinsten ist, in einem ersten Normalabstand zur Ventilplatte angeordnet ist, und die Normalabstände der übrigen Anlageflächen von Anlagefläche zu Anlagefläche verringert sind je weiter sie von der Längsachse entfernt sind. Um die Öffnungsposition der verschiedenen Ventilfeder einzustellen ist es besonders vorteilhaft, wenn die Anlageflächen unterschiedliche Normalabstände zur Ventilplatte aufweisen. Die Geometrie der Anschlagplatte kann dadurch besonders einfach gehalten werden. Bezogen auf die Auslassöffnung, die taktweise durch die Ventilfeder geschlossen und freigegeben wird, ist der Befestigungsabschnitt der Anschlagplatte, der auch dem Befestigungsabschnitt der Ventilfeder entspricht, auf der einen Seite der Auslassöffnung und die Anlageflächen auf der gegenüberliegenden Seite der Auslassöffnung angeordnet. Mit zunehmendem Abstand der Anlageflächen von der Längsachse der Auslassöffnung (und damit vom Befestigungsabschnitt) verringert sich der Normalabstand zwischen der jeweiligen Anlagefläche und der Ventilplatte, sodass die in radialer Richtung am nächsten an der Längsachse angeordnete erste Anlagefläche den größten Normalabstand aufweist. So lässt sich über die erste Anlagefläche eine Öffnungsposition der Ventilfeder mittels der Anschlagplatte mit einer großen Öffnungshöhe einstellen, während die nachfolgenden Anlageflächen, vorzugsweise stufenförmig, jeweils geringere Öffnungshöhen ermöglichen. Dementsprechend weist die am weitesten von der Längsachse entfernte Anlagefläche den geringsten Normalabstand auf und ermöglicht somit die kleinste Öffnungshöhe der Ventilfeder. In anderen Worten muss aufgrund der in unterschiedlichen Normalabständen angeordneten Anlageflächen nur die Länge der Anschlagplatten der unterschiedlichen Auslassventile geändert werden, um zu erreichen, dass der Endbereich des freien Abschnitts der Anschlagplatte an der korrekten Anlagefläche anliegt.

Ein bevorzugte Ausführungsvariante des erfindungsgemäße Kältemittelkompressors sieht vor, dass die Anlageflächen derart relativ zur Ventilplatte, vorzugsweise in unterschiedlichen Normalabständen, angeordnet sind, dass eine Öffnungshöhe der Ventilfeder in der von der jeweiligen Anlagefläche definierten Öffnungsposition zwischen 0,8 mm und 3,0 mm, vorzugsweise zwischen 1,0 mm und 2,8 mm, besonders bevorzugt zwischen 1,2 mm und 2,6 mm, insbesondere zwischen 1,6 mm und 1,8 mm, liegt, wobei die Öffnungshöhe der Ventilfeder als maximaler Abstand zwischen der Ventilplatte und der Ventilfeder entlang einer Längsachse der Auslassöffnung gemessen definiert ist. Bei der Öffnungshöhe der Ventilfedern handelt es sich um eine relevante Bau- und Dimensionierungsgröße auf dem Gebiet der Kältemittelkompressoren. Die Normalabstände können jedoch, je nach Gestaltung des Zylinderkopfdeckels, stark variieren. Die Öffnungshöhe jedoch, ist jene relevante Größe, die für die reibungslose Funktion des Kältemittelverdichters vorgegeben ist. Durch die entsprechende Beabstandung der jeweiligen Anlageflächen von der Ventilplatte, kann somit eine Öffnungshöhe einer Ventilfeder definiert werden, die im Bereich zwischen 0,8 mm und 3 mm liegt. Sind am Zylinderkopfdeckel zwei Anlageflächen vorgesehen, so ist beispielsweise eine erste Anlagefläche derart angeordnet, dass die Öffnungshöhe der Ventilfeder in der Öffnungsposition 1,0 mm beträgt und eine zweite Anlagefläche derart angeordnet, dass die Öffnungsposition der Ventilfeder 1,8 mm beträgt. Beispielsweise sind entsprechend auch Kombinationen von 1,0 mm und 2,8 mm, von 1,2 mm und 2,6 mm, von 1,6 mm und 2,4 mm oder beliebigen anderen Kombination möglich.

Die eingangs gestellte Aufgabe wird auch gelöst durch eine Kompressorfamilie mit erfindungsgemäßen Kältemittelkompressoren die aufgrund unterschiedlicher Hubräume unterschiedlicher Kälteleistung aufweisen, wobei je nach Hubvolumen des Kolbens ein unterschiedliches Auslassventil an der Ventilplatte angebracht ist, wobei ein erfindungsgemäßer Zylinderkopfdeckel die Anschlagplatte des Auslassventils an einer der Anlageflächen abstützt, sodass für die gesamte Kompressorfamilie baugleiche Zylinderkopfdeckel einsetzbar sind. Wie eingangs beschrieben, unterscheiden sich die Kältemittelkompressoren einer Kompressorfamilie beispielsweise durch unterschiedlich starke Antriebseinheiten oder Hubräume, wobei sich im Allgemeinen die Zylinderkopfanordnungen nur durch die unterschiedlichen Auslassventile unterscheiden, wobei jedoch der Befestigungsabschnitt für den Zylinderkopfdeckel analog ausgebildet ist. Durch den Einsatz eines erfindungsgemäßen Zylinderkopfdeckels können nun unterschiedliche Kältemittelkompressoren der Kompressorfamilie mit unterschiedliche Auslassventile umfassenden Zylinderkopfanordnungen mittels baugleicher Zylinderkopfdeckel verschlossen und abgedichtet werden. Die Montage gestaltet sich besonders einfach, da die Anlageflächen des Zylinderkopfdeckels auf die Anschlagplatten der unterschiedlichen Auslassventile angepasst sind. So ist beispielsweise eine der Anlageflächen für die Anschlagplatte eines ersten Auslassventils, die eine erste Öffnungsposition der Ventilfeder festlegt, ausgebildet, eine weitere Anlagefläche für eine Anschlagplatte eines zweiten Auslassventils, die eine zweite, von der ersten unterschiedliche, Öffnungsposition der Ventilfeder festlegt, ausgelegt. Die Anzahl der unterschiedlichen Anlageflächen hängt einerseits von den unterschiedlichen Eigenschaften der Kältemittelkompressoren der Kompressorfamilie ab, je nachdem wie viele Kompressor-Typen eine unterschiedliche Öffnungsposition der Ventilfeder voraussetzen, und andererseits vom im Zylinderkopfdeckel vorhandenen Bauraum, da jede Anlagefläche eine festgelegte Mindestgröße aufweisen muss, um die Stützfunktion und gegebenenfalls die Klemmfunktion erfüllen zu können.

In einer weiteren Ausführungsvariante der Erfindung ist vorgesehen, dass die Längen der freien Abschnitte der Anschlagplatten der unterschiedlichen Auslassventile verschieden groß sind. Ebenfalls kann eine unterschiedliche Wölbung der Anschlagplatten, vorzugsweise angepasst an die Öffnungsposition der Ventilfeder also der Biegelinie der Ventilfeder folgend, vorgesehen sein. Insbesondere wenn die Anlageflächen in unterschiedlichen Abständen zur Längsachse der Auslassöffnung angeordnet sind und die einzelnen Anlageflächen in unterschiedlichen Normalabständen zur Ventilplatte angeordnet sind, kann die Öffnungsposition der Ventilfeder alleine durch die Länge des freien Abschnitts der Anschlagplatte eingestellt werden, wenn diese auf die unterschiedlichen Positionen der Anlageflächen angepasst sind. Die Anschlagplatten stehen schräg oder gewölbt von der Ventilplatte ab und kontaktieren in ihrem Endbereich die dem Auslassventil zugeordnete Anlagefläche. Beim Befestigen des Zylinderkopfdeckels am Zylindergehäuse drückt der Zylinderkopfdeckel den freien Abschnitt der Anschlagplatte vorteilhafter Weise in Richtung der Ventilplatte und versetzt die Anschlagplatte unter Vorspannung, wobei die Anschlagplatte dadurch in ihre Endposition gebracht wird. Die einzelnen Elemente, also Zylinderkopfdeckel mit Anlageflächen und Anschlagplatten lassen sich einfach fertigen und besonders einfach und kostengünstig montieren.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben. Der Schutzumfang wird durch den jeweiligen Gegenstand der Patentansprüche definiert.

Dabei zeigt:
- Fig. 1: eine Schnittansicht eines Kältemittelkompressors;
- Fig. 2a: eine Schnittdarstellung des erfindungsgemäßen Zylinderkopfdeckels mit einem ersten Auslassventil und geöffneter Ventilfeder;
- Fig. 2b: der Zylinderkopfdeckel gemäß Fig. 2a mit geschlossener Ventilfeder;
- Fig. 3a: eine Schnittdarstellung des Zylinderkopfdeckels mit einem zweiten Auslassventil und geschlossener Ventilfeder;
- Fig. 3b: der Zylinderkopfdeckel gemäß Fig. 3a mit geöffneter Ventilfeder;
- Fig. 4: eine axonometrische Darstellung eines erfindungsgemäßen Zylinderkopfdeckels,
- Fig. 5: eine Schnittdarstellung des Zylinderkopfdeckels ohne Auslassventil;
- Fig. 6: eine Detaildarstellung aus Fig. 2b.

### WEGE ZUR AUSFÜHRUNG DER ERFINDUNG

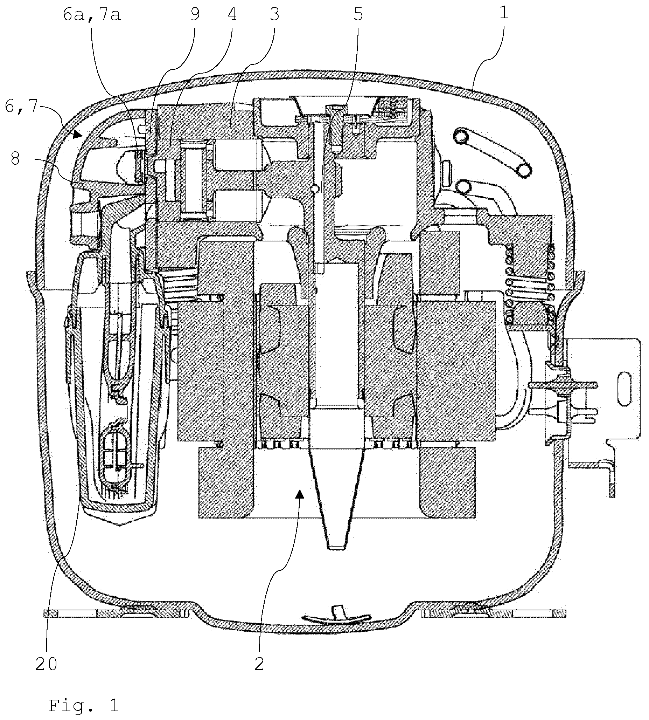

Figur 1 zeigt eine Schnittansicht durch einen erfindungsgemäßen Kältemittelkompressor, wobei die einzelnen Komponenten innerhalb eines, vorzugsweise hermetisch gekapselten, Kompressorgehäuse 1 angeordnet sind. Der Kältemittelkompressor umfasst eine elektrische Antriebseinheit 2, die als Elektromotor mit einem Rotor und einem Stator ausgebildet ist, eine Kurbelwelle 5 die mittels der Antriebseinheit 2 antreibbar ist, sowie ein Zylindergehäuse 3 in welchem ein von der Kurbelwelle 5 angetriebener Kolben 4 translatorisch bewegbar ist. In an sich bekannter Weise wird im Saugtakt Kältemittel über einen Saugschalldämpfer 20 und ein Saugventil in den Zylinder des Zylindergehäuses 3 bzw. in den Verdichtungsraum eingesaugt und beim darauffolgenden Verdichtungstakt auf ein höheres Druckniveau verdichtet. Am Ende des Verdichtungstakts wird das durch die Kolbenbewegung verdichtete Kältemittel über ein Auslassventil 6,7 ausgestoßen und in eine Druckstrecke überführt.

Um diese Funktionalität zu gewährleisten ist eine Zylinderkopfanordnung 21 vorgesehen, die eine Ventilplatte 9 umfasst, mittels derer der Zylinder verschlossen ist. Die Ventilplatte 9 weist eine durch das Saugventil taktweise verschließbare Saugöffnung und eine durch das Auslassventil 6,7 taktweise verschließbare Auslassöffnung 11 auf, mittels derer das Kältemittel in den Zylinder bzw. aus dem Zylinder gelangt. Die Ventilplatte 9 wird durch einen Zylinderkopfdeckel 8 am Zylindergehäuse 3 festgeklemmt, wobei üblicher Weise Dichtelemente 15, beispielsweise Flachdichtungen aus Kunststoff oder Papier, zwischen der Ventilplatte 9 und dem Zylinderkopfdeckel 8 bzw. zwischen der Ventilplatte 9 und dem Zylindergehäuse 3 angeordnet sind. Der Zylinderkopfdeckel 8 bildet dabei mit der Ventilplatte 9 einen Hohlraum aus, in den das verdichtete Kältemittel aus dem Verdichtungsraum über das Auslassventil 6,7 eintritt.

In der Regel werden Kältemittelkompressoren im Rahmen einer Kompressorfamilie hergestellt, wobei sich die einzelnen Kältemittelkompressor-Typen durch ihre Kälteleistung unterscheiden. Die Einstellung von unterschiedlichen Kälteleistungen kann durch unterschiedliche Dimensionierung der Antriebseinheit 2 erfolgen und/oder durch verschieden große Hubräume. Innerhalb der Kompressorfamilie variieren jedoch die übrigen baulichen Maßnahmen nur geringfügig. Aufgrund der unterschiedlichen Kälteleistung unterscheiden sich auch die Masseströme des Kältemittels die in einem Ausstoßtakt über das Auslassventil 6,7 in den vom Zylinderkopfdeckel 8 ausgebildeten Hohlraum eintreten. Daher müssen die Auslassventile 6,7 in verschiedenen Kältemittelkompressor-Typen einer Kompressorfamilie unterschiedlich gestaltet sein.

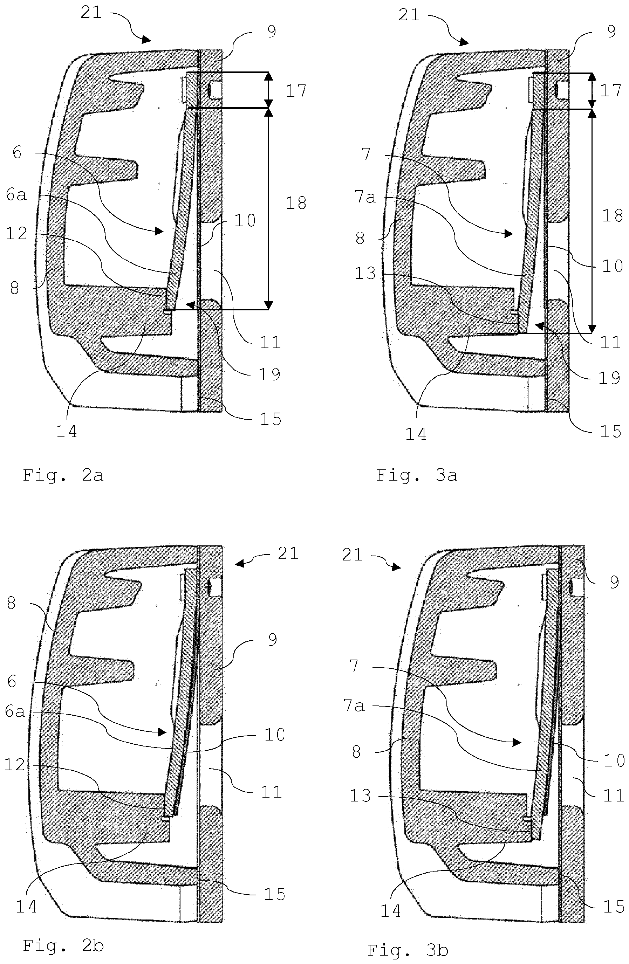

Ein Auslassventil 6,7 umfasst, wie in den Figuren 2 und 3 anhand der Erfindung dargestellt ist, eine Ventilplatte 10 und eine Anschlagplatte 6a,7a für die Ventilfeder 10, wobei die Anschlagplatte 6a,7a die Öffnungsbewegung der Ventilfeder 10 begrenzt und so eine Öffnungsposition der Ventilfeder 10 definiert. Während des Verdichtungstakts erhöht sich der Staudruck auf die Ventilfeder 10 so lange, bis die Ventilfeder 10 öffnet. Dabei kommt es bei einem definierten Staudruck, der in einem definierten Kurbelwinkelbereich erreicht wird, zum Öffnen der Ventilfeder 10, die während des Öffnens beschleunigt wird. Um eine Überlastung der Ventilfeder 10 zu verhindern, ist die Anschlagplatte 6a,7a zur Begrenzung der Öffnungsbewegung der Ventilfeder 10 vorgesehen. In der Öffnungsposition liegt die Ventilfeder 10 zumindest im Bereich der Projektion der Auslassöffnung 11 auf die Anschlagplatte 6a,7a vollflächig an der Anschlagplatte 6a,7a an und kann nicht weiter geöffnet werden. Die Anschlagplatte 6a,7a ist, wie auch die Ventilfeder 10, an der Ventilplatte 9 befestigt, vorzugsweise angenietet. Nach dem Stand der Technik stützt sich die Anschlagplatte 6a,7a an der Innenseite des Zylinderkopfdeckels 8 ab. Dadurch ergeben sich jedoch im Stand der Technik folgende Nachteile: Da die Anschlagplatten 6a,7a unterschiedlicher Auslassventile 6,7, die jeweils verschiedene Öffnungspositionen der Ventilfedern 10 festlegen, einen Gegenpart zur Abstützung im Zylinderkopfdeckel 8 benötigen, muss der Zylinderkopfdeckel 8 genau an das entsprechende Auslassventil 6,7 angepasst werden, um die Anschlagplatte 6a,7a in der richtigen Position abstützen zu können. Es bedarf also einer konkreten Kombination aus einem Auslassventil 6,7 und einem auf das Auslassventil 6,7 angepassten Zylinderkopfdeckel 8, was eine große Anzahl an verschiedenen Kombinationen bedingt. Damit verbunden sind hohe Fertigungskosten für die angepassten Zylinderkopfdeckel 8 und hohe Montagekosten, da jeweils vor der Durchführung der Montageschritte überprüft werden muss, ob der für das Auslassventil 6,7 passende Zylinderkopfdeckel 8 verwendet wird.

Die Figuren 2a und 2b zeigen einen Querschnitt durch die Zylinderkopfanordnung 21 mit einem ersten Auslassventil 6 und dem erfindungsgemäßen Zylinderkopfdeckel 8, die Figuren 3a und 3b zeigen einen Querschnitt durch die Zylinderkopfanordnung 21 mit einem zweiten Auslassventil 7 und dem erfindungsgemäßen Zylinderkopfdeckel 8. Wie im Vergleich der Figuren 2 und 3 deutlich zu erkennen ist, werden die oben geschilderten Nachteile des Stands der Technik dadurch überwunden, dass der Zylinderkopfdeckel 8 mehrere Anlageflächen 12,13 aufweist, die jeweils für ein unterschiedliches Auslassventil 6,7 vorgesehen sind.

Der Zylinderkopfdeckel 8 weist in der dargestellten Ausführungsvariante zwei Anlageflächen 12,13 für die Anschlagplatten 6a,7a zweier unterschiedlicher Auslassventile 6,7 auf. In alternativen Ausführungsvarianten können auch mehr als zwei Anlageflächen, beispielsweise drei, vier oder fünf Anlageflächen, vorgesehen sein. Da die erste Anlagefläche 12 für die Anlage der ersten Anschlagplatte 6a des ersten Auslassventils 6 ausgebildet ist und die zweite Anlagefläche 13 für die Anlage der zweiten Anschlagplatte 7a des zweiten Auslassventils 7 ausgebildet ist, lassen sich mit baugleichen Zylinderkopfdeckeln 8 zwei unterschiedliche Auslassventile 6,7 in der Zylinderkopfanordnung 21 positionieren. Mit anderen Worten kann der Zylinderkopfdeckel 8 in verschiedenen Kältemittelkompressoren oder Kältemittelkompressor-Typen verwendet werden, die jeweils unterschiedliche Öffnungspositionen der Ventilfeder 10 voraussetzen und dementsprechend unterschiedliche Auslassventile 6,7 aufweisen.

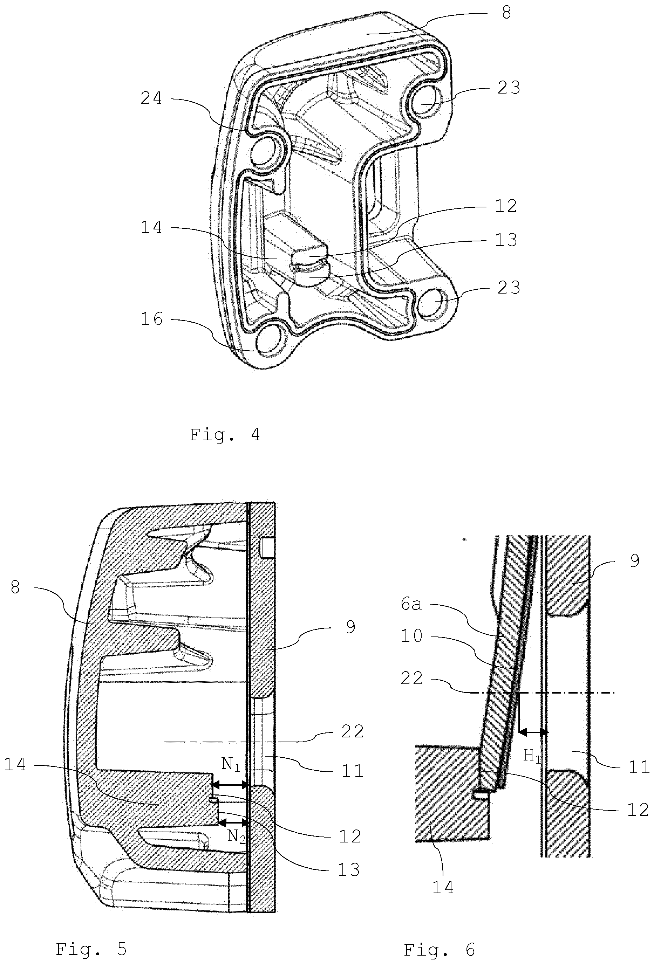

Die Anlageflächen 12,13 sind naturgemäß im den Hohlraum ausbildenden Innenraum des Zylinderkopfdeckels 8 angeordnet und sind der Ventilplatte 9 zugewandt. Im vorliegenden Ausführungsbeispiel weist der Zylinderkopfdeckel 8 ein Stützelement 14 auf, welches die Anlageflächen 12,13 ausbildet. Der Zylinderkopfdeckel 8 samt Stützelement 14 ist dabei einteilig als Gussteil ausgebildet, wobei das Stützelement 14 von der Deckfläche des Zylinderkopfdeckels 8 in Richtung der Ventilplatte 9 abragt. Der Zylinderkopfdeckel 8 weist auf der der Ventilplatte 9 zugewandten Seite eine umlaufende, Dichtfläche 16 auf, um mittels des zwischen Zylinderkopfdeckel 8 und Ventilplatte 9 angeordneten Dichtelements 15 den ausgebildeten Hohlraum abzudichten. Wie in Fig. 4 zu erkennen, weist die grundsätzlich plane Dichtfläche 16 eine umlaufende Wulst 24 auf, welche die Flächenpressung auf das Dichtelement 15 erhöht, wodurch das Dichtelement 15 zwischen Zylinderkopfdeckel 8 und Ventilplatte 9 fixiert ist und ein Herausdrücken des Dichtelements 15 während des Betriebs verhindert.

Die beiden Anlageflächen 12,13 sind dabei von einem stufenförmigen Absatz des Stützelements 14 ausgebildet, wobei die Anlageflächen 12,13 parallel zur Ventilplatte 9 bzw. parallel zur Dichtfläche 16 ausgerichtet sind. In alternativen Ausführungsvarianten kann auch vorgesehen sein, dass die Anlageflächen 12,13 parallel zueinander ausgerichtet sind, jedoch in Bezug zur Dichtfläche 16 schräg verlaufen oder dass die Anlageflächen 12,13 gekrümmt ausgebildet sind, beispielsweise um der Form der Anschlagplatten 6a,7a zu entsprechen. Die beschriebenen Möglichkeiten für die Anordnung und Gestaltung der ersten und zweiten Anlagefläche 12,13 lassen sich auf eine beliebige Anzahl an Anlageflächen anwenden.

In den Figuren 2a und 3a ist deutlich zu erkennen, dass die Anschlagplatten 6a,7a der Auslassventile 6,7 unterschiedlich ausgebildet sind, während die Ventilfedern 10 baugleich ausgebildet sind. Es versteht sich dabei von selbst, dass die Auslassventile 6,7 auch unterschiedlich ausgebildete Ventilfedern 10 aufweisen können. Die beiden Auslassventile 6,7 befinden sich dabei in einer geschlossenen Position in der die Auslassöffnung 11 durch die Ventilfeder 10 verschlossen ist. Diese Position nehmen die Auslassventile 6,7 in der Regel während des Saugtakts und während der Verdichtung ein, bevor die Ventilfedern 10 dem Staudruck nachgeben und die Öffnungsposition einnehmen.

Zur Verdeutlichung der Anordnung der Anlageflächen 12,13, ist in Figur 5 der an der Ventilplatte 9 befestigte Zylinderkopfdeckel 8 ohne Auslassventil 6,7 dargestellt. Es ist dabei deutlich zu erkennen, dass die erste Anlagefläche 12 in einem ersten Normalabstand N₁ und die zweite Anlagefläche 13 in einem zweiten Normalabstand N₁ zur Ventilplatte 9 bzw. zur Dichtfläche 16 angeordnet sind. Die erste Anlagefläche 12 ist näher an der Längsachse 22 der Auslassöffnung 11 angeordnet, weist also einen geringeren Abstand zur Längsachse 22 in radialer Richtung (bezogen auf die Längsachse 22) auf. Ebenfalls ist der erste Normalabstand N₁ größer als der zweite Normalabstand N₂, sodass die erste Anlagefläche 12 in Bezug zur Ventilplatte 9 höher liegt als die zweite Anlagefläche 12. Im vorliegenden Ausführungsbeispiel beträgt der erste Normalabstand N₁ der ersten Anlagefläche 12 6,1 mm während der zweite Normalabstand N₂ der zweiten Anlagefläche 13 5,2 mm beträgt. Wäre eine dritte und eine vierte Anlagefläche vorgesehen, so würde die dritte Anlagefläche einen geringeren Normalabstand aufweisen als die zweite und die vierte eine geringere als die dritte, sodass jene Anlagefläche, die den größten radialen Abstand zur Längsachse 22 aufweist, den geringsten Normalabstand zur Ventilplatte 9 aufweist.

Diese unterschiedlichen Normalabstand N₁,N₂ bewirken, dass die an der ersten Anlagefläche 12 anliegende erste Anschlagplatte 6a (Fig. 2a und 2b) eine größere Öffnung der Ventilfeder 10 ermöglicht (Fig. 2b) als die an der zweiten Anlagefläche 13 anliegende zweite Anschlagplatte 7a (Fig. 3b), wobei die beiden Anschlagplatte 6a,7a im Wesentlichen die selbe Stärke aufweisen. Mit anderen Worten können durch die erfindungsgemäße Ausbildung der beiden Anlageflächen 12,13 in einfacher Weise unterschiedliche Öffnungspositionen der Ventilfedern 10 eingestellt werden, je nachdem ob eine Anschlagplatte 6a für die erste Anlagefläche 12 oder eine Anschlagplatte 7a für die zweite Anlagefläche 13 vorgesehen ist. Der Vergleich der Figuren 2b und 3b zeigt dabei besonders deutlich die beiden unterschiedlichen Öffnungspositionen der Ventilfedern 10 der beiden unterschiedlichen

Auslassventile 6,7, wobei die Ventilfeder 10 des ersten Auslassventils 6 in ihrer Öffnungsposition weiter geöffnet ist als die Ventilfeder 10 des zweiten Auslassventils 7.

Zur Verdeutlichung dieses Sachverhalts zeigt Figur 6 eine Detaildarstellung des ersten Auslassventils 6 in der geöffneten Position (siehe Fig. 2b), wobei insbesondere der Bereich rund um die Auslassöffnung 11 in der Ventilplatte 9 abgebildet ist. Die erste Anschlagplatte 6a stütz sich dabei an der ersten Anlagefläche 12 des Zylinderkopfdeckels 8 ab. Eingezeichnet ist dabei eine erste Öffnungshöhe H₁ der ersten Ventilfeder 10, die entlang der Längsachse 22 als Abstand zwischen der Oberseite der Ventilplatte 9 und der Unterseite der an der ersten Anschlagplatte 6a anliegenden Ventilfeder 10 gemessen. Im vorliegen Ausführungsbeispiel beträgt die Öffnungshöhe H₁ 2,6 mm, während die zweite Öffnungshöhe H₂ des zweiten Auslassventils 7 (nicht dargestellt) in analoger Weise bestimmt ist und im vorliegenden Ausführungsbeispiel 1,6 mm beträgt. Denkbare Werte für die Öffnungshöhe H der Ventilfeder für Kältemittelkompressoren mit einem Hubraum zwischen 15 cm³ und 21 cm³ sind dabei 1,0 mm, 1,2 mm, 1,6 mm, 1,8 mm, 2,6 mm und 2,8 mm. Es versteht sich dabei von selbst, dass durch jede der Anlageflächen 12,13 eine Öffnungshöhe H einer Ventilfeder 10 eines Auslassventils definiert wird und beliebige Kombinationen unterschiedlicher Öffnungshöhen H denkbar sind. Für Kältemittelkompressoren die einen kleineren oder größeren Hubraum aufweisen, können auch von den oben angegebenen Werten abweichende Werte für die Öffnungshöhe H vorgesehen sein.

Auch deutlich zu erkennen ist, dass die Ventilfedern 10 beider Auslassventile 6,7 in der Öffnungsposition vollflächig an der jeweiligen Anschlagplatte 6a,7a anliegt und die Anschlagplatten 6a,7a derart gewölbt sind, dass sie der Biegelinie der Ventilfedern 10 entspricht. Die Anschlagplatten 6a,7a weisen jeweils einen Befestigungsabschnitt 17, mittels dessen die Anschlagplatten 6a,7a an der Ventilplatte 9 befestigt sind, und einen freien Abschnitt 18 auf, wobei der freie Abschnitt 18 die Anschlagfläche für die Ventilfeder 10 ausbildet, wie in den Figuren 2a und 3a beispielhaft eingezeichnet ist. Der freien Abschnitt 18 weist an dem dem Befestigungsabschnitt 17 gegenüberliegenden Ende einen Endbereich 19 auf, der mit einer der Anlageflächen 12,13 in Eingriff steht. Wie aus den Figuren 2 und 3 ersichtlich ist, sind die Anlageflächen 12,13 auf der dem Befestigungsabschnitt 17 gegenüberliegenden Seite der Auslassöffnung 11 angeordnet, sodass die Anschlagplatten 6a,7a an beiden Enden abgestützt werden. Der Befestigungsabschnitt 17 ist, gemeinsam mit einem Befestigungsabschnitt der Ventilfeder 10, mit der Ventilplatte 9 vernietet.

Die erste Anschlagplatte 6a unterscheidet sich von der zweiten Anschlagplatte 7a insbesondere durch die Länge, also der Erstreckung vom Endbereich 19 bis zum gegenüberliegenden Ende des Befestigungsabschnitts 17, und durch die Wölbung. Dadurch kann in einfacher Art und Weise über die Dimensionierung der Länge und der Wölbung der Anschlagplatten 6a,7a in Übereinstimmung mit dem Normalabstand und dem radialen Abstand der Anlageflächen 12,13 der Kontakt zwischen mit einer der Anlageflächen 12,13 sicher gestellt werden.

Figur 4 zeigt eine dreidimensionale Abbildung des erfindungsgemäßen Zylinderkopfdeckels 8, aus der insbesondere die Anordnung der Anlageflächen 12,13 und die Gestaltung des Stützelements 14 hervorgehen. Weiters ersichtlich ist die Dichtfläche 16 und sind die, in diesem Ausführungsbeispiel vier, Befestigungsöffnungen 23 die an der der Ventilplatte 9 zuweisenden Seite des Zylinderkopfdeckels 8 angeordnet sind. Die Befestigungsöffnungen 23, die mit entsprechenden Öffnungen in der Ventilplatte 9 und mit Gewindebohrungen im Zylindergehäuse 3 korrespondieren, dienen zur Aufnahme von Befestigungsmitteln, etwa Schrauben, mittels derer der Zylinderkopfdeckel 8 am Zylindergehäuse 3 befestigt ist. Durch das Anziehen der Befestigungsmittel wird einerseits das Dichtelement 15 verformt, um den Hohlraum und den Zylinder abzudichten, andererseits wird die Anschlagplatte 6a,7a durch den Kontakt mit der Anlagefläche 12,13 elastisch verformt und dadurch vorgespannt.

### BEZUGSZEICHENLISTE

- 1: Kompressorgehäuse
- 2: elektrische Antriebseinheit
- 3: Zylindergehäuse
- 4: Kolben
- 5: Kurbelwelle
- 6: erstes Auslassventil
6a erste Anschlagplatte
- 7: zweites Auslassventil
7a zweite Anschlagplatte
- 8: Zylinderkopfdeckel
- 9: Ventilplatte
- 10: Ventilfeder
- 11: Auslassöffnung
- 12: erste Anlagefläche
- 13: zweite Anlagefläche
- 14: Stützelement
- 15: Dichtelement
- 16: Dichtfläche
- 17: Befestigungsabschnitt
- 18: freier Abschnitt
- 19: Endbereich des freien Abschnitts
- 20: Saugschalldämpfer
- 21: Zylinderkopfanordnung
- 22: Längsachse der Auslassöffnung 11
- 23: Befestigungsöffnung
- 24: Wulst

## Patentansprüche

1. Zylinderkopfdeckel (8) für einen eine elektrische Antriebseinheit (2), ein Zylindergehäuse (3) mit einer Zylinderkopfanordnung (21), eine von der elektrischen Antriebseinheit (2) antreibbare Kurbelwelle (5) sowie einen von der Kurbelwelle (5) angetriebenen, im Zylindergehäuse (3) geführten, das Kältemittel verdichtenden, Kolben (4) umfassenden Kältemittelkompressor,
wobei der Zylinderkopfdeckel (8) an der Zylinderkopfanordnung (21) befestigbar ist, um einen Hohlraum zur Aufnahme von durch den Kolben (4) verdichtetem Kältemittel auszubilden,
wobei die Zylinderkopfanordnung (21) eine am Zylindergehäuse (3) befestigte Ventilplatte (9) mit einer Auslassöffnung (11) und einem die Auslassöffnung (11) taktweise verschließenden Auslassventil (6,7) bestehend aus einer Ventilfeder (10) und einer Anschlagplatte (6a,7a) zur Begrenzung einer Öffnungsbewegung der Ventilfeder (10) umfasst,
**dadurch gekennzeichnet, dass**
der Zylinderkopfdeckel (8) zumindest zwei Anlageflächen (12,13) für die Abstützung von Anschlagplatten (6a,7a) unterschiedlicher Auslassventile (6,7) aufweist, um unterschiedliche Öffnungspositionen der Ventilfedern (10) der unterschiedlichen Auslassventile (6,7) zu ermöglichen, **und dass** der Zylinderkopfdeckel (8) ein die Anlageflächen (12,13) ausbildendes Stützelement (14) aufweist und jeweils zwei benachbarte Anlageflächen (12,13) von jeweils einem, vorzugsweise stufenförmigen, Absatz des Stützelements (14) ausgebildet sind.

2. Zylinderkopfdeckel (8) nach Anspruch 1, **dadurch gekennzeichnet, dass** der Zylinderkopfdeckel (8) eine umlaufende Dichtfläche (16) zur Abdichtung des durch die Ventilplatte (9) begrenzten Hohlraums aufweist und
dass die Anlageflächen (12,13) in einem unterschiedlich großen Normalabstand (N₁,N₂) zur Dichtfläche (16) angeordnet sind.

3. Zylinderkopfdeckel (8) nach Anspruch 2, **dadurch gekennzeichnet, dass** die Höhendifferenz zwischen der der Dichtfläche (16) am nächsten angeordneten Anlagefläche (12) und der von der Dichtfläche (16) am weitesten entfernten Anlagefläche (13) in einem Bereich zwischen 0,2 mm und 2,6 mm, vorzugsweise zwischen 0,4 mm und 2,0 mm, besonders bevorzugt zwischen 0,6 mm und 1,6 mm, insbesondere zwischen 0,8 mm und 1,2 mm, liegt.

4. Zylinderkopfdeckel (8) nach Anspruch 2 oder 3, **dadurch gekennzeichnet, dass** die Höhendifferenz zwischen zwei benachbarten Anlageflächen (12,13) zwischen 0,2 mm und 2 mm, vorzugsweise zwischen 0,4 mm und 1,6 mm, insbesondere zwischen 0,8 mm und 1 mm, liegt.

5. Zylinderkopfdeckel (8) nach einem der Ansprüche 1 bis 4, **dadurch gekennzeichnet, dass** die Anlageflächen (12,13) gekrümmt ausgebildet sind und vorzugsweise an die Form der Anschlagplatten (6a,7a) unterschiedlicher Auslassventile (6,7) angepasst sind.

6. Zylinderkopfdeckel (8) nach einem der Ansprüche 1 bis 4, **dadurch gekennzeichnet, dass** die Anlageflächen (12,13) parallel zueinander, und vorzugsweise parallel zur Dichtfläche (16), ausgerichtet sind.

7. Zylinderkopfdeckel (8) nach einem der Ansprüche 1 bis 6, **dadurch gekennzeichnet, dass** das Stützelement (14) eine erste (12) und eine zweite Anlagefläche (13) aufweist, wobei die erste Anlagefläche (12) zur Abstützung der Anschlagplatte (6a) eines ersten Auslassventils (6) ausgebildet ist, um eine erste Öffnungsposition der Ventilfeder (10) des ersten Auslassventils (6) einzustellen,
und wobei die zweite Anlagefläche (13) zur Abstützung der Anschlagplatte (7a) eines alternativen Auslassventils (7) ausgebildet ist, um eine alternative Öffnungsposition der Ventilfeder (10) des alternativen Auslassventils (7) einzustellen.

8. Kältemittelkompressor mit einer elektrischen Antriebseinheit (2), einem Zylindergehäuse (3), einer von der elektrischen Antriebseinheit (2) antreibbaren Kurbelwelle (5) sowie einem von der Kurbelwelle (5) angetriebenen, im Zylindergehäuse (3) geführten, Kältemittel verdichtenden, Kolben (4),
wobei eine Zylinderkopfanordnung (21) mit einer eine Auslassöffnung (11) aufweisenden Ventilplatte (9) und einem Auslassventil (6,7) am Zylindergehäuse (3) befestigt ist,
wobei das Auslassventil (6,7) eine die Auslassöffnung (11) taktweise verschließende Ventilfeder (10) und eine an der Ventilplatte (9) angeordnete Anschlagplatte (6a,7a) zur Begrenzung der Öffnungsbewegung der Ventilfeder (10) umfasst,
und ein die Anschlagplatte (6a,7a) abstützender Zylinderkopfdeckel (8) an der Zylinderkopfanordnung (21) befestigt ist,
**dadurch gekennzeichnet, dass**
der Zylinderkopfdeckel (8) nach einem der Ansprüche 1 bis 7 ausgebildet ist.

9. Kältemittelkompressor nach Anspruch 8, **dadurch gekennzeichnet, dass** die Anschlagplatte (6a,7a) einen an der Ventilplatte (9) befestigten
Befestigungsabschnitt (17) und einen, vorzugsweise gewölbten, freien Abschnitt (18) zur Begrenzung der Öffnungsbewegung der Ventilfeder (10) aufweist, wobei ein Endbereich (19) des freien Abschnitts (18) an einer der Anlageflächen (12,13) anliegt.

10. Kältemittelkompressor nach Anspruch 9, **dadurch gekennzeichnet, dass** die Anschlagplatte (6a,7a) zwischen der jeweiligen Anlagefläche (12,13) und der Ventilplatte (9) vorgespannt ist.

11. Kältemittelkompressor nach Anspruch 9 oder 10, **dadurch gekennzeichnet, dass** diejenige Anlagefläche (12), deren Abstand von der Längsachse (22) der Auslassöffnung (11) in radialer Richtung am kleinsten ist, in einem ersten Normalabstand (N₁) zur Ventilplatte (9) angeordnet ist, und die Normalabstände (N₂) der übrigen
Anlageflächen (13) von Anlagefläche zu Anlagefläche verringert sind je weiter sie von der Längsachse (22) entfernt sind.

12. Kältemittelkompressor nach einem der Ansprüche 8 bis 11, **dadurch gekennzeichnet, dass** die Anlageflächen (12,13) derart relativ zur Ventilplatte (9), vorzugsweise in unterschiedlichen Normalabständen (N₁,N₂), angeordnet sind, dass eine Öffnungshöhe (H₁,H₂) der Ventilfeder (10) in der von der jeweiligen Anlagefläche (12,13) definierten Öffnungsposition zwischen 0,8 mm und 3,0 mm, vorzugsweise zwischen 1,0 mm und 2,8 mm, besonders bevorzugt zwischen 1,2 mm und 2,6 mm, insbesondere zwischen 1,6 mm und 1,8 mm, liegt,
wobei die Öffnungshöhe (H₁,H₂) der Ventilfeder (10) als maximaler Abstand zwischen der Ventilplatte (9) und der Ventilfeder (10) entlang einer Längsachse (22) der Auslassöffnung (11) gemessen definiert ist.

13. Kompressorfamilie mit Kältemittelkompressoren mit aufgrund unterschiedlicher Hubräume unterschiedlicher Kälteleistung nach einem der Ansprüche 8 bis 12, wobei je nach Hubvolumen des Kolbens (4) ein unterschiedliches Auslassventil (6,7) an der Ventilplatte (9) angebracht ist
wobei ein Zylinderkopfdeckel (8) nach einem der Ansprüche 1 bis 6 die Anschlagplatte (6a,7a) des Auslassventils (6,7) an einer der Anlageflächen (12,13) abstützt, sodass für die gesamte Kompressorfamilie baugleiche Zylinderkopfdeckel (8) einsetzbar sind.

14. Kompressorfamilie nach Anspruch 13, **dadurch gekennzeichnet, dass** die Längen der freien Abschnitte (18) der Anschlagplatten (6a,7a) der unterschiedlichen Auslassventile (6,7) verschieden groß sind.

## Claims

1. Cylinder head cover (8) for a coolant compressor comprising an electric drive unit (2), a cylinder housing (3) with a cylinder head arrangement (21), a crankshaft (5) drivable by the electric drive unit (2), and a piston (4) driven by the crankshaft (5), guided in the cylinder housing (3) and compressing the coolant, wherein the cylinder head cover (8) is attachable to the cylinder head arrangement (21) in order to form a hollow space for receiving a coolant compressed by the piston (4),
wherein the cylinder head arrangement (21) comprises a valve plate (9) attached to the cylinder housing (3) with an outlet opening (11) and an outlet valve (6,7), which closes the outlet opening (11) in cycles and consists of a valve spring (10) and a stop plate (6a,7a) for delimiting an opening movement of the valve spring (10),
**characterized in that**
the cylinder head cover (8) comprises at least two contact surfaces (12,13) for supporting the stop plates (6a,7a) of different outlet valves (6,7) in order to allow for different opening positions of the valve springs (10) of the different outlet valves (6,7)
**and in that** the cylinder head cover (8) has a support element (14) which forms the contact surfaces (12,13), and two adjacent contact surfaces (12,13) are formed by one, preferably stepped, recess of the support element (14) .

2. Cylinder head cover (8) according to claim 1, **characterized in that** the cylinder head cover (8) comprises a continuous sealing surface (16) for sealing the hollow space delimited by the valve plate (9), and that the contact surfaces (12,13) are arranged at a varying standard distance (N₁,N₂) from the sealing surface (16).

3. Cylinder head cover (8) according to claim 2, **characterized in that** the height difference between the contact surface (12) arranged closest to the sealing surface (16) and the contact surface (13) arranged furthest from the sealing surface (16) lies in a range between 0,2 mm and 2,6 mm, preferably between 0,4 mm and 2,0 mm, particularly preferably between 0,6 mm and 1,6 mm, particularly between 0,8 mm and 1,2 mm.

4. Cylinder head cover (8) according to claim 2 or 3, **characterized in that** the height difference between two adjacent contact surfaces (12,13) lies between 0,2 mm und 2 mm, preferably between 0,4 mm and 1,6 mm, particularly between 0,8 mm and 1 mm.

5. Cylinder head cover (8) according to one of the claims 1 to 4, **characterized in that** the contact surfaces (12,13) are designed to be curved and preferably adjusted to the shape of the stop plates (6a,7a) of different outlet valves (6,7).

6. Cylinder head cover (8) according to one of the claims 1 to 4, **characterized in that** the contact surfaces (12,13) are aligned parallel to one another, and preferably parallel to the sealing surface (16).

7. Cylinder head cover (8) according to one of the claims 1 to 6, **characterized in that** the support element (14) comprises a first (12) and a second contact surface (13), wherein the first contact surface (12) is designed to support the stop plate (6a) of a first outlet valve (6) in order to adjust a first opening position of the valve spring (10) of the first outlet valve (6),
and wherein the second contact surface (13) is designed to support the stop plate (7a) of an alternative outlet valve (7) in order to adjust an alternative opening position of the valve spring (10) of the alternative outlet valve (7).

8. Coolant compressor having an electric drive unit (2), a cylinder housing (3), a crankshaft (5) drivable by the electric drive unit (2), and a piston (4) driven by the crankshaft (5), guided in the cylinder housing (3) and compressing the coolant,
wherein a cylinder head arrangement (21) with a valve plate (9), which comprises an outlet opening (11), and an outlet valve (6,7) is fastened to the cylinder housing (3),
wherein the outlet valve (6,7) comprises a valve spring (10), which closes the outlet opening (11) in cycles, and a stop plate (6a,7a) arranged on the valve plate (9) for delimiting the opening movement of the valve spring (10),
and a cylinder head cover (8), which supports the stop plate (6a,7a), is fastened to the cylinder head arrangement (21),
**characterized in that**
the cylinder head cover (8) is designed according to one of the claims 1 to 7.

9. Coolant compressor according to claim 8, **characterized in that** the stop plate (6a,7a) comprises a fastening section (17) attached to the valve plate (9) and a, preferably curved, free section (18) for delimiting the opening movement of the valve spring (10), wherein an end portion (19) of the free section (18) bears against one of the contact surfaces (12,13).

10. Coolant compressor according to claim 9, **characterized in that** the stop plate (6a,7a) is pre-stressed between the corresponding contact surface (12,13) and the valve plate (9).

11. Coolant compressor according to claim 9 or 10, **characterized in that** the contact surface (12) with the shortest distance from the longitudinal axis (22) of the outlet opening (11) in radial direction is arranged at a first standard distance (N₁) from the valve plate (9), and the standard distances (N₂) of the remaining contact surfaces (13) are reduced from contact surface to contact surface, the further away they are from the longitudinal axis (22).

12. Coolant compressor according to one of the claims 8 to 11, **characterized in that** the contact surfaces (12,13) are arranged relative to the valve plate (9), preferably at different standard distances (N₁,N₂), such that an opening height (H₂,H₂) of the valve spring (10) in the opening position defined by the corresponding contact surface (12,13) lies between 0,8 mm and 3,0 mm, preferably between 1,0 mm and 2,8 mm, particularly preferably between 1,2 mm and 2,6 mm, particularly between 1,6 mm and 1,8 mm,
wherein the opening height (H₁,H₂) of the valve spring (10) is defined as the maximum distance between the valve plate (9) and the valve spring (10), measured along a longitudinal axis (22) of the outlet opening (11).

13. Compressor family with coolant compressors having a different cooling capacity due to different displacements according to one of the claims 8 to 12,
wherein, depending on the displacement of the piston (4), a different outlet valve (6,7) is attached to the valve plate (9),
wherein a cylinder head cover (8) according to one of the claims 1 to 6 supports the stop plate (6a,7a) of the outlet valve (6,7) on one of the contact surfaces (12,13), and so structurally identical cylinder head covers (8) can be used for the entire compressor family.

14. Compressor family according to claim 13, **characterized in that** the lengths of the free sections (18) of the stop plates (6a,7a) of the different outlet valves (6,7) differ from one another.

## Revendications

1. Couvercle de tête de cylindre (8) pour un compresseur de réfrigérant comprenant une unité d'entraînement électrique (2), un corps de cylindre (3) avec une disposition de tête de cylindre (21), un vilebrequin (5) pouvant être entraîné par l'unité d'entraînement électrique (2) et un piston (4) entraîné par le vilebrequin (5), guidé dans le corps de cylindre (3) et comprimant le réfrigérant, lequel couvercle de tête de cylindre (8) peut être fixé sur la disposition de tête de cylindre (21) pour former une cavité pouvant recevoir du réfrigérant comprimé par le piston (4),
dans lequel la disposition de tête de cylindre (21) comprend une plaque de soupape (9) fixée au corps de cylindre (3) avec une ouverture d'échappement (11) et une soupape d'échappement (6, 7) qui ferme l'ouverture d'échappement (11) de façon cadencée et qui se compose d'un ressort de soupape (10) et d'une plaque de butée (6a, 7a) pour limiter un mouvement d'ouverture du ressort de soupape (10), **caractérisé en ce que** le couvercle de tête de cylindre (8) comporte au moins deux surfaces d'appui (12, 13) pour soutenir des plaques de butée (6a, 7a) de soupapes d'échappement (6, 7) différentes, afin de permettre des positions d'ouverture différentes des ressorts de soupape (10) des différentes soupapes d'échappement (6, 7), et **en ce que** le couvercle de tête de cylindre (8) comporte un élément d'appui (14) formant les surfaces d'appui (12, 13) et les surfaces d'appui (12, 13) voisines deux par deux sont formées chacune par un épaulement, de préférence en forme de gradin, de l'élément d'appui (14).

2. Couvercle de tête de cylindre (8) selon la revendication 1, **caractérisé en ce que** le couvercle de tête de cylindre (8) comporte une surface d'étanchéité (16) circonférentielle pour assurer l'étanchéité de la cavité délimitée par la plaque de soupape (9) et **en ce que** les surfaces d'appui (12, 13) sont disposées à une distance normale (N₁, N₂) différente de la surface d'étanchéité (16).

3. Couvercle de tête de cylindre (8) selon la revendication 2, **caractérisé en ce que** la différence de hauteur entre la surface d'appui (12) la plus proche de la surface d'étanchéité (16) et la surface d'appui (13) la plus éloignée de la surface d'étanchéité (16) est comprise entre 0,2 mm et 2,6 mm, de préférence entre 0,4 mm et 2,0 mm, en particulier entre 0,6 mm et 1,6 mm, tout particulièrement entre 0,8 mm et 1,2 mm.

4. Couvercle de tête de cylindre (8) selon la revendication 2 ou 3, **caractérisé en ce que** la différence de hauteur entre deux surfaces d'appui (12, 13) voisines est comprise entre 0,2 mm et 2 mm, de préférence entre 0,4 mm et 1,6 mm, en particulier entre 0,8 mm et 1 mm.

5. Couvercle de tête de cylindre (8) selon l'une des revendications 1 à 4, **caractérisé en ce que** les surfaces d'appui (12, 13) ont une forme incurvée et sont de préférence adaptées à la forme des plaques de butée (6a, 7a) de différentes soupapes d'échappement (6, 7).

6. Couvercle de tête de cylindre (8) selon l'une des revendications 1 à 4, **caractérisé en ce que** les surfaces d'appui (12, 13) sont orientées parallèlement les unes aux autres et de préférence parallèlement à la surface d'étanchéité (16).

7. Couvercle de tête de cylindre (8) selon l'une des revendications 1 à 6, **caractérisé en ce que** l'élément d'appui (14) présente une première surface d'appui (12) et une deuxième (13), la première surface d'appui (12) étant conformée pour soutenir la plaque de butée (6a) d'une première soupape d'échappement (6) afin d'ajuster une première position d'ouverture du ressort de soupape (10) de la première soupape d'échappement (6) et la deuxième surface d'appui (13) étant conformée pour soutenir la plaque de butée (7a) d'une autre soupape d'échappement (7) afin d'ajuster une position d'ouverture alternative du ressort de soupape (10) de l'autre soupape d'échappement (7).

8. Compresseur de réfrigérant avec une unité d'entraînement électrique (2), un corps de cylindre (3), un vilebrequin (5) pouvant être entraîné par l'unité d'entraînement électrique (2) et un piston (4) entraîné par le vilebrequin (5), guidé dans le corps de cylindre (3) et comprimant du réfrigérant,
dans lequel une disposition de tête de cylindre (21) munie d'une plaque de soupape (9) présentant une ouverture d'échappement (11) et d'une soupape d'échappement (6, 7) est fixée sur le corps de cylindre (3),
dans lequel la soupape d'échappement (6, 7) comprend un ressort de soupape (10) qui ferme l'ouverture d'échappement (11) de façon cadencée et une plaque de butée (6a, 7a) disposée sur la plaque de soupape (9) pour limiter le mouvement d'ouverture du ressort de soupape (10),
et un couvercle de tête de cylindre (8) soutenant la plaque de butée (6a, 7a) est fixé sur la disposition de tête de cylindre (21),
**caractérisé en ce que** le couvercle de tête de cylindre (8) est conformé selon l'une des revendications 1 à 7.

9. Compresseur de réfrigérant selon la revendication 8, **caractérisé en ce que** la plaque de butée (6a, 7a) présente une section de fixation (17) fixée à la plaque de soupape (9) et une section libre (18), de préférence incurvée, destinée à limiter le mouvement d'ouverture du ressort de soupape (10), une partie d'extrémité (19) de la section libre (18) reposant sur une des surfaces d'appui (12, 13).

10. Compresseur de réfrigérant selon la revendication 9, **caractérisé en ce que** la plaque de butée (6a, 7a) est précontrainte entre la surface d'appui (12, 13) correspondante et la plaque de soupape (9).

11. Compresseur de réfrigérant selon la revendication 9 ou 10, **caractérisé en ce que** la surface d'appui (12) qui se trouve à la plus petite distance de l'axe longitudinal (22) de l'ouverture d'échappement (11) dans le sens axial est disposée à une première distance normale (N₁) de la plaque de soupape (9) et les distances normales (N₂) entre les autres surfaces d'appui (13) d'une surface d'appui à l'autre sont de plus en plus réduites en s'éloignant de l'axe longitudinal (22).

12. Compresseur de réfrigérant selon l'une des revendications 8 à 11, **caractérisé en ce que** les surfaces d'appui (12, 13) sont disposées par rapport à la plaque de soupape (9), de préférence à des distances normales (N₁, N₂) différentes, de telle manière qu'une hauteur d'ouverture (H₁, H₂) du ressort de soupape (10) dans la position d'ouverture définie par la surface d'appui (12, 13) correspondante se situe entre 0,8 mm et 3,0 mm, de préférence entre 1,0 mm et 2,8 mm, en particulier entre 1,2 mm et 2,6 mm, tout particulièrement entre 1,6 mm et 1,8 mm,
la hauteur d'ouverture (H₁, H₂) du ressort de soupape (10) étant définie comme la distance maximale entre la plaque de soupape (9) et le ressort de soupape (10) le long d'un axe longitudinal (22) de l'ouverture d'échappement (11).

13. Gamme de compresseurs comprenant des compresseurs de réfrigérant qui ont un rendement frigorifique différent en raison de leurs cylindrées différentes selon l'une des revendications 8 à 12, dans laquelle, selon le volume de course du piston (4), une soupape d'échappement (6, 7) différente est montée sur la plaque de soupape (9),
dans laquelle un couvercle de tête de cylindre (8) selon l'une des revendications 1 à 6 soutient la plaque de butée (6a, 7a) de la soupape d'échappement (6, 7) sur une des surfaces d'appui (12, 13) de telle sorte que des couvercles de tête de cylindre (8) de construction identique peuvent être utilisés pour toute la gamme de compresseurs.

14. Gamme de compresseurs selon la revendication 13, **caractérisé en ce que** la longueur des sections libres (18) des plaques de butée (6a, 7a) des différentes soupapes d'échappement (6, 7) est différente.
